# DEMANDE DE BREVET EUROPEEN

(11) **EP 0 629 539 A1**
(43) Date de publication de la demande: **21.12.1994**
(21) Numéro de dépôt: 94420175.5
(22) Date de dépôt: 15.06.1994
(51) Int. Cl.: B62B 9/10, B62B 9/14

(54) **Véhicule du type poussette**

(30) Priorité: 15.06.1993 FR 9307437
(71) Demandeur: MONNERET JOUETS, F-39000 Lons-Le-Saunier (FR)
(72) Inventeur: Monneret, Alain, F-39210 Voiteur (FR)
(74) Mandataire: Perrier, Jean-Pierre

(57) **Abrégé**

Véhicule pour porter un objet ou une personne, comprenant un piètement (1) avec moyens de roulement (2, 3, 4, 5), et une nacelle (6) supportée par ce dernier, constituée par au moins une armature (7), ainsi qu'une enveloppe (8) flexible adaptée à la surface développée de l'armature, recouvrant et fixée sur ladite armature, **caractérisé en ce que** ladite armature (7) comprend un châssis (9) central ayant généralement la forme d'une auge, constitué par deux flancs (10) de part et d'autre d'une base (11), un fond plat (13) dont la partie médiane (13a) est adaptée en forme et dimensions pour être enserrée entre les deux flancs (10) du châssis central (9), en reposant à plat sur sa base (11), et un cercle (14) dont la forme est adaptée au contour du fond plat, et dont deux parties médianes (14a) sont écartées l'une de l'autre selon une distance compatible avec l'écartement des deux flancs (10) du châssis central (9).

## Description

La présente invention concerne de manière générale un véhicule pour porter ou transporter un objet ou une personne, comprenant un piètement avec des moyens de roulement et une nacelle supportée par ce dernier, destinée à recevoir ledit objet ou ladite personne. La présente invention va être décrite par référence à une poussette jouet, destinée à recevoir la poupée d'un enfant, mais il est précisé que les dispositions ou caractéristiques techniques décrites ci-après peuvent être exploitées pour une poussette réelle pour enfant.

De manière générale, l'invention concerne une poussette, dont la nacelle est constituée par au moins une armature déterminant un bac de réception dudit objet ou de ladite personne, lui-même supporté par ledit piètement, ainsi que par une enveloppe souple, adaptée à la surface développée de l'armature, telle qu'une pièce de tissu, recouvrant et fixée sur ladite armature.

L'invention a pour objet une armature permettant d'obtenir toute sorte de nacelles, tant en formes qu'en dimensions, au moyen d'une pièce principale standard et de deux pièces spécifiques à chacune des formes ou dimensions des différents modèles.

Selon la présente invention, l'armature comprend au moins trois pièces, destinées à coopérer les unes avec les autres pour constituer la nacelle, à savoir :
- un châssis central ayant généralement la forme d'une auge, constitué par deux flancs saillant de part et d'autre d'une base munie de moyens de fixation sur le piètement,
- un fond plat dont la partie centrale est adaptée, en forme et dimensions, pour être enserrée entre les flancs du châssis central, en reposant à plat sur sa base,
- un cercle dont la forme est adaptée au contour du fond plat, et dont au moins les deux parties centrales de ses côtés longitudinaux sont écartées l'une de l'autre selon une distance compatible avec l'écartement des deux flancs du châssis central,
- et des moyens de fixation des parties centrales du cercle, à ou sur la partie supérieure des deux flancs du châssis central.

Grâce à l'invention, en prévoyant différents jeux de fonds plats et de cercles, il est possible à partir du même châssis central d'obtenir des modèles de nacelles se différenciant par leur longueur ou forme générale.

La présente invention est maintenant décrite en référence au dessin annexé, dans lequel :
- la figure 1 est une vue en perspective d'une poussette selon l'invention, lorsqu'elle est en position montée et d'utilisation,
- la figure 2 est une vue similaire à la figure 1 lorsque la nacelle est détachée du piètement,
- la figure 3 est une vue en perspective de l'armature de la nacelle et des arceaux de la capote,
- la figure 4 représente une vue en coupe verticale selon la ligne IV-IV de la figure 3, d'une pièce d'articulation de la capote,
- la figure 5 est une vue de côté avec coupe partielle représentant, en position montée et d'utilisation, le piètement de la poussette,
- la figure 6 est une vue en coupe de la nacelle montée selon VI-VI de figure 2.

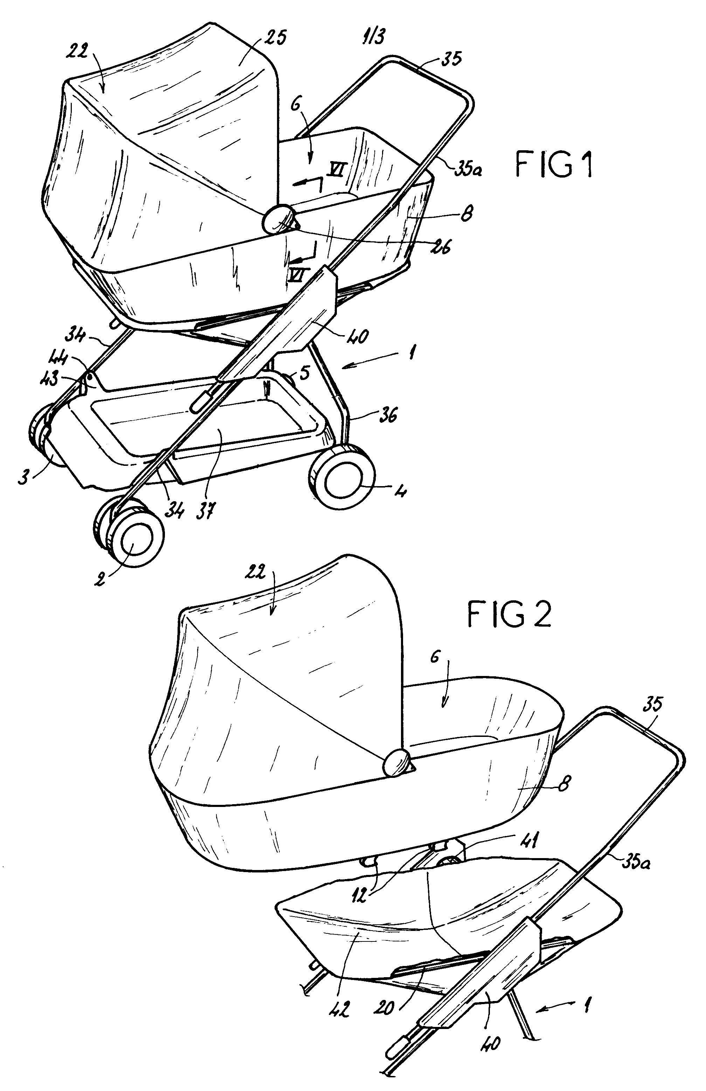

De manière générale, cette poussette comprend :
- un piètement 1 avec des moyens de roulement 2 à 5,
- une nacelle 6 supportée par le piètement 1, constituée par une armature 7 déterminant un bac de réception de la poupée de l'enfant, avec une enveloppe souple 8, telle qu'une pièce de tissu, adaptée à la surface développée de ladite armature
- et une capote 22 constituée par une pluralité d'arceaux 23 et 24, articulés autour d'un même axe de rotation, une pièce d'un matériau souple, par exemple une pièce de tissu, recouvrant et étant fixée sur lesdits arceaux ; cette capote est susceptible de prendre deux positions, à savoir une position déployée montrée figures 1 et 2, et une position repliée, non représentée.

Comme représenté plus particulièrement aux figures 1 et 5, le piètement 1 comprend deux montants avant 34, deux montants arrière 36 et un brancard à poignée transversale 35. Sur les extrémités inférieures des montants 34 sont montées deux jeux de deux roues, 2 et 3, et chacune des extrémités supérieures de ces montants 34 est fixée sur une pièce de liaison 40 en matière synthétique.

Les deux branches 35a du brancard sont fixées sur les pièces 40 sensiblement dans le prolongement des montants 34. Les montants arrière 36 sont articulés en 36a sur les mêmes pièces 40 et sont munies à leurs extrémités inférieures de roues 4 et 5.

Les articulations 36a constituent pivots pour des noix internes 41 de fixation d'un cadre tubulaire 20, de forme générale rectangulaire portant une pièce de tissu 42. Cette pièce forme hamac et peut servir de siège pour la poupée de l'enfant lorsque le cadre 20 est disposé sensiblement parallèlement aux montants 34.

Le piètement porte, en partie inférieure, un panier 37 en matière synthétique moulée. Ce panier est solidaire de pattes antérieures 43 par lesquelles il s'articule en 44 à la base et entre les montants avant 34. Sur l'arrière, le panier comporte une nervure creuse 45 avec au moins deux pattes encochées 46 aptes à s'encliqueter élastiquement sur une traverse 38 reliant les extrémités inférieures des montants 36.

Comme montré à la figure 5, au moins l'une des pièces de liaison 40 est munie d'un levier 39 pouvant occuper une position de verrouillage, représentée en traits continus, et dans laquelle il s'oppose à la rotation du montant 36 correspondant, et une position de déverrouillage, représentée en traits mixtes, dans laquelle il tolère cette rotation.

Il résulte de la description précédente que le piètement peut occuper une position repliée de stockage ou de transport, dans laquelle sont repliés les uns contre les autres et sensiblement parallèles, le cadre 20, les montants 34, le brancard 35, le panier 37, et les bras 36, et une position dépliée ou d'utilisation, telle que représentée à la figure 5.

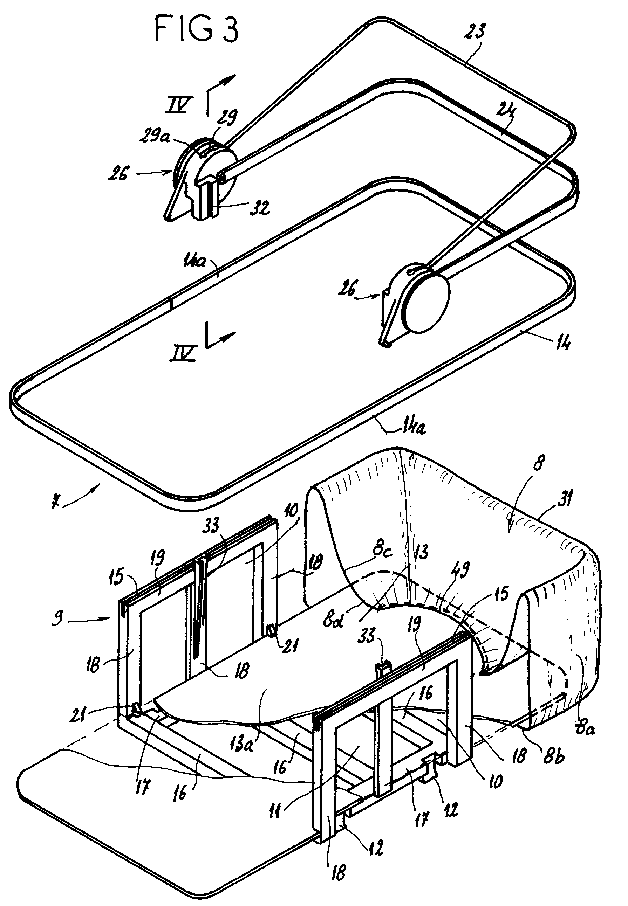

Comme représenté à la figure 3, l'armature 7 pour la nacelle comprend un châssis central 9, réalisé sous la forme d'une pièce monobloc ajourée, notamment en matière synthétique, ayant la forme générale d'une auge. Ce châssis est constitué par deux flancs sensiblement verticaux 10 disposés de part et d'autre d'une base 11. Cette dernière comporte des ergots élastiques extérieurs 12, aptes à s'encliqueter sur le cadre tubulaire rigide 20 du piètement, pour assurer la fixation de la nacelle.

Dans cette forme d'exécution, la base 11 comprend au moins deux et ici trois traverses 16 reliées entre elles par deux longerons latéraux 17 et chaque flanc 10 comprend au moins deux et en l'occurrence trois montants 18, reliés entre eux par une entretoise supérieure 19. Un fond plat 13, par exemple en carton rigide, repose à plat sur la base 11 du châssis 9. Il a une forme générale rectangulaire, dont la partie médiane 13a est adaptée pour être enserrée entre les deux flancs 10 du châssis 9. Pour bloquer le fond plat 13 sur le châssis 9, chaque flanc 10 du châssis 9 comprend deux ergots 21, déterminant chacun avec la base 11 du même cadre un interstice de coincement de la tranche du fond plat 13, et comportant chacun à l'opposé dudit interstice une rampe de glissement vers le bas du même fond plat 13.

Un cercle 14, ayant une forme générale rectangulaire et constitué par une lame métallique sur chant, est fixé sur la partie supérieure des deux flancs 10 du châssis central 9 de l'armature 7. Au moins les parties centrales des deux côtés longitudinaux 14a du cercle 14 sont écartées de la même valeur que les deux flancs 10 du châssis central 9 et, plus précisément, que deux rainures rectilignes 15 ménagées dans les entretoises 19 et dans lesquelles ils s'insèrent.

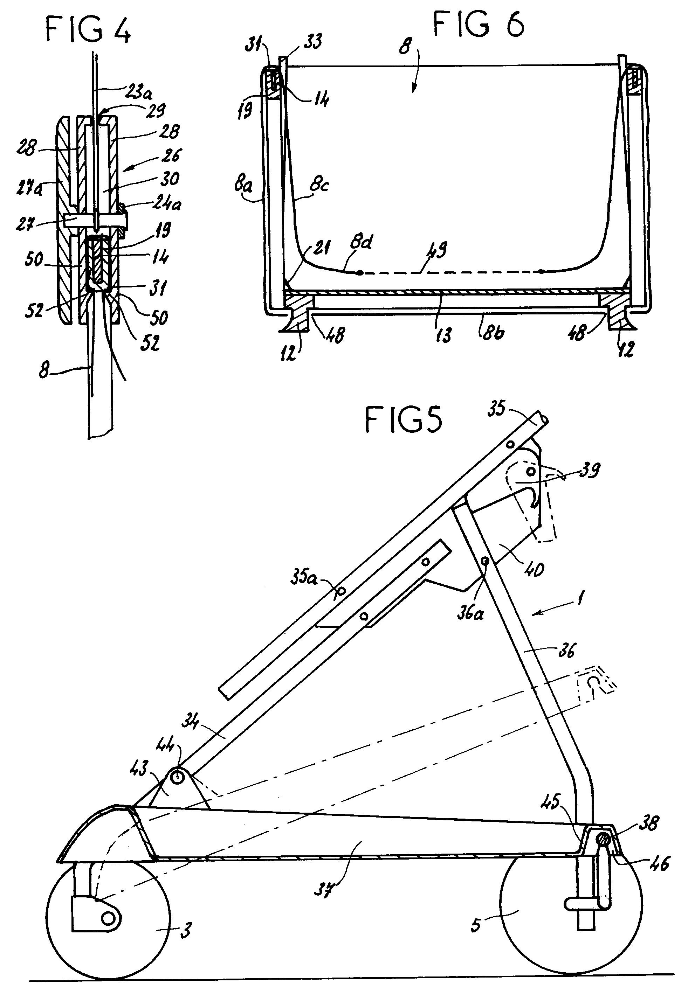

Comme montré figure 6, l'enveloppe 8 réalisée en tissu ou autre matière souple comprend une partie externe composée de flancs 8a et d'un fond 8b et une partie interne composée de flancs 8c et d'un fond 8d. Le fond 8b de la partie externe comporte des ouvertures 48 pour le passage des ergots élastiques 12, tandis que le fond 8d de la partie interne comporte une découpe centrale 49 ceinturée par un ourlet recevant un élastique de mise en tension. Cette ouverture permet de monter l'enveloppe sur l'armature et de la démonter pour son lavage et son remplacement. La zone de transition entre les parties, respectivement externe et interne de l'enveloppe, forme un pli 31 coiffant le cadre 14 et les entretoises supérieures 19 du châssis central 9. Ce pli comporte localement deux ouvertures, non représentées, pour le passage des tenons 33 de positionnement des pièces 26 d'articulation de la capote.

On notera que le châssis 9 de l'armature peut être utilisé avec un fond 13, un cercle 14 et une enveloppe 8 différents pour former une nacelle plus ou moins longue ou ayant des extrémités plus ou moins arrondies. Un autre avantage de cette construction est qu'il donne à la nacelle une rigidité dans le plan vertical qui sécurise l'enfant.

Comme montré figure 4, chacune des pièces 26 d'articulation de la capote 22 est composée de deux flasques 28 calés en rotation l'un par rapport à l'autre par des moyens non représentés et liés axialement par un pivot 27 faisant corps avec un enjoliveur 27a. Ces deux flasques délimitant un interstice de pivotement 30 communiquant à l'extérieur par une fente en arc de cercle 29 dont les bords sont crantés en 29a (figure 3). L'extrémité 23a de l'arceau 23 de la capote est articulée sur le pivot 27 dans l'interstice 30 tandis que l'extrémité 24a de l'arceau 24 est articulée sur le même pivot 27, mais hors des flasques et sur leur côté tourné vers l'intérieur de la poussette.

Le flasque intérieur 28 de chaque pièce d'articulation 26 est solidaire d'une mortaise verticale et dorsale 32 (visible figure 3) apte à s'engager sur l'un des tenons 33 saillant verticalement des flancs 10 du châssis central 9.

Enfin, les deux flasques 28 forment, entre eux et au-dessous du pivot 27, deux mâchoires espacées 50 d'encliquetage et comportant chacune, en vis-à-vis de l'autre, un cran 52. Lors du montage de chaque pièce 26 sur l'entretoise supérieure 19 de l'armature les deux mâchoires des flasques 28 s'écartent élastiquement en enfourchant l'entretoise 19 correspondante de l'armature, jusqu'à ce que leurs crans 52, prennent appui sous l'entretoise, comme montré figure 4. Dans cette configuration les flasques assurent non seulement la liaison en translation verticale de la pièce d'articulation 26 avec la nacelle 6, mais aussi le pincement du pli 31 de l'enveloppe 8 contre les faces de l'entretoise 19. Ce pincement s'effectue des deux côtés de la nacelle et assure, seul, le calage de l'enveloppe 8 par rapport à l'armature 7, à la fois longitudinalement et verticalement. De ce fait, les pièces 26 participent à la réalisation de la nacelle en empêchant tous déplacements de son enveloppe.

## Revendications

1. Véhicule pour porter un objet ou une personne, comprenant un piètement (1) avec moyens de roulement (2, 3, 4, 5), et une nacelle (6) supportée par ce dernier, constituée par au moins une armature (7) déterminant un bac de réception dudit objet ou de ladite personne, et supporté par le piètement, ainsi qu'une enveloppe souple (8) adaptée à la surface développée de l'armature, telle qu'une pièce de tissu, recouvrant et fixée sur ladite armature, **caractérisé en ce que** ladite armature (7) comprend :
a) un châssis (9) central ayant généralement la forme d'une auge et constitué par deux flancs (10) saillant de part et d'autre d'une base (11) munies de moyens (12) de fixation sur le piètement (1) traversant l'enveloppe de la nacelle,
b) un fond plat (13) dont la partie centrale (13a) est adaptée en forme et dimensions pour être enserrée entre les deux flancs (10) du châssis central (9), en reposant à plat sur sa base (11), et
c) un cercle (14) dont la forme est adaptée au contour du fond plat, et dont au moins les deux parties centrales (14a) des côtés longitudinaux sont écartées l'une de l'autre selon une distance, compatible avec l'écartement des deux flancs (10) du châssis central (9), ainsi que
d) des moyens (15) de fixation desdites parties centrales (14a) dudit cercle (14) à la partie supérieure des deux flancs (10) du châssis central (9).

2. Véhicule selon la revendication 1, **caractérisé en ce que** la base (11) du châssis central (9) comprend au moins deux traverses (16) reliées entre elles par deux longerons (17).

3. Véhicule selon la revendication 1, **caractérisé en ce que** chaque flanc (10) du châssis central (9) comprend au moins deux montants (18) reliés entre eux par une entretoise supérieure (19).

4. Véhicule selon la revendication 1, **caractérisé en ce que** le châssis central (9) est réalisé sous la forme d'une pièce monobloc ajourée, en matière synthétique.

5. Véhicule selon la revendication 1, **caractérisé en ce que** les moyens (12) de fixation de la base (11) du châssis central (9), au piètement (1), comprennent des ergots élastiques (12) situés sur et à l'extérieur de ladite base, et adaptés chacun à un encliquetage sur une partie rigide (20) du piètement.

6. Véhicule selon la revendication 1, **caractérisé en ce que** chaque flanc (10) du châssis central (9) comprend au moins un ergot (21) déterminant, avec la base (11) du même cadre, un interstice de coincement de la tranche du fond plat (13), et comportant, à l'opposé dudit interstice, une rampe de glissement vers le bas du même fond plat.

7. Véhicule selon la revendication 1, **caractérisé en ce que** le cercle (14) est constitué par une lame métallique sur chant, et les moyens (15) de fixation des deux parties centrales (14a) de ce dernier consistent en deux rainures (15) ménagées dans les entretoises supérieures (19) des deux flancs (11).

8. Véhicule selon l'une quelconque des revendications 1 à 7, **caractérisé en ce que** chacune des deux pièces d'articulation (26) des arceaux (23, 24) de la capote est composée de deux flasques (28) qui, au-dessous du pivot (27) les reliant et servant à l'articulation des arceaux, forment deux mâchoires espacées (50) à serrage élastique aptes à s'enfourcher avec pincement sur l'entretoise supérieure (19) de l'armature (7) en pinçant le pli (31) de l'enveloppe (8) de la nacelle.

9. Véhicule selon la revendication 8, **caractérisé en ce que** chacun des flasques (28) d'une pièce d'articulation (26) comporte, en vis-à-vis de l'autre flasque, un cran (52) d'encliquetage sous l'entretoise.

10. Véhicule selon l'une quelconque des revendications 8 et 9, **caractérisé en ce que** chaque pièce d'articulation (26) est solidaire d'une mortaise verticale (32) apte à s'engager sur l'un des deux tenons de positionnement (33) saillant verticalement vers le haut des flancs du châssis central (9).
